Europäisches Patentamt

European Patent Office

Office européen des brevets

(11) Veröffentlichungsnummer: **0 209 655**
**A2**

(12) **EUROPÄISCHE PATENTANMELDUNG**

(21) Anmeldenummer: 86106361.8

(22) Anmeldetag: 09.05.86

(51) Int. Cl.⁴: **B01D 29/30**

(30) Priorität: 28.05.85 DE 3519042

(43) Veröffentlichungstag der Anmeldung:
28.01.87 Patentblatt 87/05

(84) Benannte Vertragsstaaten:
AT BE CH DE FR GB IT LI LU NL SE

(71) Anmelder: Kohlheb, Robert, Dr.
Andershäuser Strasse 15
D-3352 Einbeck(DE)

(72) Erfinder: Kohlheb, Robert, Dr.
Andershäuser Strasse 15
D-3352 Einbeck(DE)

(74) Vertreter: Jaeger, Klaus, Dr.
JAEGER & PARTNER Patentanwälte
Bergstrasse 48 1/2
D-8035 München-Gauting(DE)

(54) Schlauchfilter.

(57) Bei dem Schlauchfilter für die Druckfiltration ist der als Filterelement dienende Filterschlauch außen vollständig von einem fluiddurchlässigen Druckmantelgewebe, insbesondere einem Stahldrahtgewebe, umgeben. Dies ermöglicht den Betrieb des Schlauchfilters bei hohem Innendruck und fehlendem oder nur geringem filtratseitigen Überdruck. Die Schlauchfilter lassen sich als Modulen zum Aufbau praktisch beliebig konfigurierter Druckfiltrationsgeräte nutzen. Zur Vergrößerung der Strömungsgeschwindigkeit des zu behandelnden Mediums über die Filteroberfläche sind in den Schläuchen vorzugsweise Volumenreduktionskörper angeordnet.

EP 0 209 655 A2

## Schlauchfilter

Die Erfindung betrifft einen Schlauchfilter für die Druckfiltration der im Oberbegriff des Anspruchs 1 genannten Art.

Speziell betrifft die Erfindung einen Schlauchfilter für die Druckfiltration, bei dem ein poröser Filterschlauch als Filterelement verwendet wird.

Schlauchfilter der genannten Art werden vozugsweise im Bereich der Feinfiltration und der Mikrofiltration, insbesondere mit Trenngrenzen im Bereich von 1 bis 10 $\mu$m, eingesetzt, lassen sich prinzipiell jedoch auch für die Ultrafiltration und die Umkehrosmose verwenden. Wenn daher in der folgenden Beschreibung aus Gründen der klareren und einfacheren Darstellung stets nur von "Filtration", "Filter" und "Filtrat" die Rede ist, so sind diese Begriffe jedoch stets so zu lesen, daß sie auch die filtrationsverwandten Verfahren, insbesondere das Verfahren der Umkehrosmose, mit einschließen.

Der Erfindung liegt die Aufgabe zugrunde, einen Schlauchfilter der eingangs genannten Art für die Druckfiltration zu schaffen, der insbesondere aus Gründen der bequemen und einfachen Montage und aus Rückspülgründen flexibel ist und so als Modul konzipiert werden kann, daß er in Druckfiltrationsgeräten sowohl in Serie als auch in Parallelschaltung leicht montierbar und auswechselbar in den verschiedensten Konfigurationen als Filterbauelement verwendbar ist, und zwar sowohl in Druckgeräten mit überdrucklosen als auch in Geräten mit überdruckbeaufschlagten Filtratkammern.

Zur Lösung dieser Aufgabe schafft die Erfindung einen Schlauchfilter für die Druckfiltration der eingangs genannten Art, bei dem erfindungsgemäß der als Filterelement dienende Filterschlauch außen vollständig mit einem fluiddurchlässigen Druckmantelgewebe umhüllt ist. Der Schlauchfilter der Erfindung ist also für eine Filtration in radialer Strömungsrichtung vom Inneren des Schlauches durch die Schlauchwand hindurch nach außen ausgelegt. Das auf dem Außenmantel des Filterschlauches austretende Filtrat kann durch Verwendung des Gewebemantels als Druckmantel an jeder beliebigen Stelle frei durch den flexiblen Druckpanzer hindurch auf die Außenseite des Schlauchfilters austreten und von dort ungehindert ablaufen oder abtropfen, je nach Auslegung des Druckfiltrationsgerätes, in dem der Schlauchfilter gemäß der Erfindung eingesetzt wird. Die Verwendung des fluiddurchlässigen Druckmantelgewebes als äußerer Druckpanzer erhält dem Filterschlauch also nicht nur seine Flexibilität, sondern praktisch auch seine gesamte aktive Filterfläche, da das auf der Außenwand des Schlauches austretende Filtrat durch das Druckmantelgewebe praktisch an jeder beliebigen Stelle des Filterschlauches frei durch den Druckpanzer hindurchtreten und ablaufen kann.

Der Filterschlauch besteht vorzugsweise aus einem porösen Kunststoff, insbesondere porösem Polytetrafluorethylen, Polyurethan, Polyamid oder hochdichtem Polyethylen. Der Innendurchmesser der Filterschläuche liegt typischerweise im Bereich von ca. 4 bis 20 mm, während die Länge des einzelnen, meist als Modulelement ausgebildeten Schlauchfilters typischerweise im Bereich von 0,3 bis 1,5 m liegt. Andere Dimensionierungen sind selbstverständlich jederzeit möglich.

Nach einer Ausgestaltung der Erfindung weist der Schlauchfilter als Filterelement einen beidseitig offenen Filterschlauch auf, an dessen einem Ende ein Druckanschluß für den Zulauf und an dessen anderem Ende ein Druckanschluß für den Konzentratablauf angeordnet ist. Bei dieser Bauweise dient der Schlauchfilter gemäß der Erfindung also als Filter zur Durchführung einer Querstromfiltration, also einer Filtration, bei der der Zulauf-Konzentratablauf-Strom quer über die Trennmitteloberfläche und damit zumindest im wesentlichen quer zur Strömungsrichtung des Filtrats geführt wird.

Insbesondere bei der zuletzt genannten Ausführung des Filterschlauchs gemäß der Erfindung sind die Enden des Druckmantelgewebes der Druckpanzerhülle vorzugsweise mit den Druckanschlüssen für den Filterschlauch druckfest und integriert verbunden, sei dies durch eine Ringklemmverbindung, sei dies durch Anschweißen.

Das Druckmantelgewebe, das den Filterschlauch vollständig umhüllend umgibt, kann prinzipiell aus jedem beliebigen druckfesten und unter den gegebenen Druckverhältnissen nicht oder nur unwesentlich dehnbaren fasrigen oder drahtförmigen Gewebestrukturen bestehen, so beispielsweise aus zugfesten und nicht dehnbaren Kunststoffgeweben, vorzugsweise Polyamidgeweben. Wo immer dies unter Berücksichtigung der Korrosionsunterdrückung möglich ist, ist das Druckmantelgewebe für den Filterschlauch vorzugsweise jedoch ein Stahldrahtgewebe, da dieses für den Schlauchfilter nicht nur sicheren Betrieb bei hohen Drücken, und zwar auch noch bei Betriebsdrücken von über 50.000 kPa, sondern vor allem auch das Arbeiten bei hohen Betriebstemperaturen, so beispielsweise bei entsprechender Werkstoffwahl für den Filterschlauch, das Arbeiten bei Betriebstemperaturen bis in den Bereich von fast 200 °C hinein ermöglicht. Für die vorzugsweise als Schraubverschlüsse ausgebildeten Druckanschlüsse und die Stahldraht-Gewebehülle für den Filterschlauch werden vorzugsweise Stähle der Werkstoffnummern 1.4301, 1.4541 oder 1.4571 oder auch Legierungen der Werkstoffnummern 2.0882, 2.4360 oder 2.4819 (nach DIN 17007) eingesetzt.

Im Hinblick auf eine möglichst effektive Ausnutzung der verfügbaren Membranfläche, auf eine möglichst lange Standzeit des Schlauchfilters ist es vorteilhaft, im Filterschlauch eine möglichst hohe Strömungsgeschwindigkeit des zu behandelnden Mediums über die Filterfläche hinweg einzustellen und aufrechtzuerhalten. Um dieses Betriebserfordernis auch bei größeren Schlauchquerschnitten mit vertretbarem Energie-und Anlagenaufwand gewährleisten zu können, ist nach einer Ausgestaltung der Erfindung im Filterschlauch vorzugsweise ein zumindest im wesentlichen stabförmiger Reduktionskörper eingebracht, dessen Außendurchmesser geringfügig kleiner als der Innendurchmesser des Filterschlauchs ist, so daß zwischen dem Reduktionskörper und der Innenwandfläche des Filterschlauchs ein nur relativ - schmaler zylindrischer Ringraum freibleibt, durch den das zu behandelnde Medium hindurchströmen kann. In diesem Ringraum lassen sich dann auch mit bereits geringem Energieaufwand und kleinen Pumpen Strömungsgeschwindigkeiten des zu behandelnden Mediums über die gesamte verfügbare Filteroberfläche hinweg im Bereich von bis zu 10 $m \cdot s^{-1}$ erzielen.

Aufgrund der vorzugsweise eingestellten hohen Strömungsgeschwindigkeiten des zu behandelnden Mediums im Filterschlauch sind die Stirnseiten des stabförmigen Reduktionskörpers vorzugsweise strömungsgünstig profiliert, und zwar sowohl anströmseitig als auch abströmseitig. Eine solche Profilierung kann im einfachsten Fall kegelförmig oder paraboloid sein oder andere strömungsgünstige Tropfenformen aufweisen. Auch ist es bei den angestrebten Strömungsgeschwindigkeiten des zu behandelnden Mediums durch den Ringraum hindurch nicht erforderlich, den Reduktionskörper radial im Filterschlauch zu fixieren. Versuche haben gezeigt, daß bei ausreichender axialer Anschlagfixierung des Reduktionskörpers die Strömungsgeschwindigkeit im Ringraum ausreicht, um den Reduktionskörper ausreichend stabil und exakt koaxial im Filterschlauch zu zentrieren. Die axiale Fixierung des Reduktionskörpers kann dabei in einfachster Weise durch eine Anschlagfixierung am Kragen einer in den Filterschlauch eingeführten und dort befestigten Stützhülse erfolgen. Eine solche axiale Fixierung ist insbesondere abströmseitig erforderlich, kann jedoch aus Gründen der sichereren Handhabung des Filterschlauchs auch anströmseitig, vorzugsweise mit weitem Spiel, vorgesehen sein.

Wenn der Reduktionskörper aus einem starren Werkstoff besteht, ist er vorzugsweise um so viel kürzer als die Länge des Filterschlauchs bzw. des gesamten Schlauchfilters ausgebildet, daß der Schlauchfilter in dem nicht vom Reduktionskörper ausgefüllten Bereich eine ausreichende Flexibilität bewahrt, um ihn in seiner Montagehandlichkeit nicht zu beeinträchtigen. Vorzugsweise ist jedoch auch der Reduktionskörper aus einem biegeelastischen Werkstoff hergestellt, insbesondere einem elastischen Polymer mit einer Härte von mindestens 70 Shore A, so daß der Schlauchfilter auch mit eingesetztem Reduktionskörper seine Flexibilität insgesamt auf seine gesamte Länge beibehält.

Weitere Ausgestaltungen der Erfindung sind Gegenstand der Unteransprüche.

Die Erfindung ist im folgenden anhand von Ausführungsbeispielen in Verbindung mit der Zeichnung näher erläutert. Es zeigen:

Fig.1 in schematischer Darstellung einen Querschnitt durch einen Schlauchfilter, wobei die Druckanschlüsse nicht dargestellt sind; und

Fig. 2 in ebenfalls schematischer Darstellung ein Druckfiltrationsgerät, bei dem die Schlauchfilter gemäß der Erfindung verwendet sind.

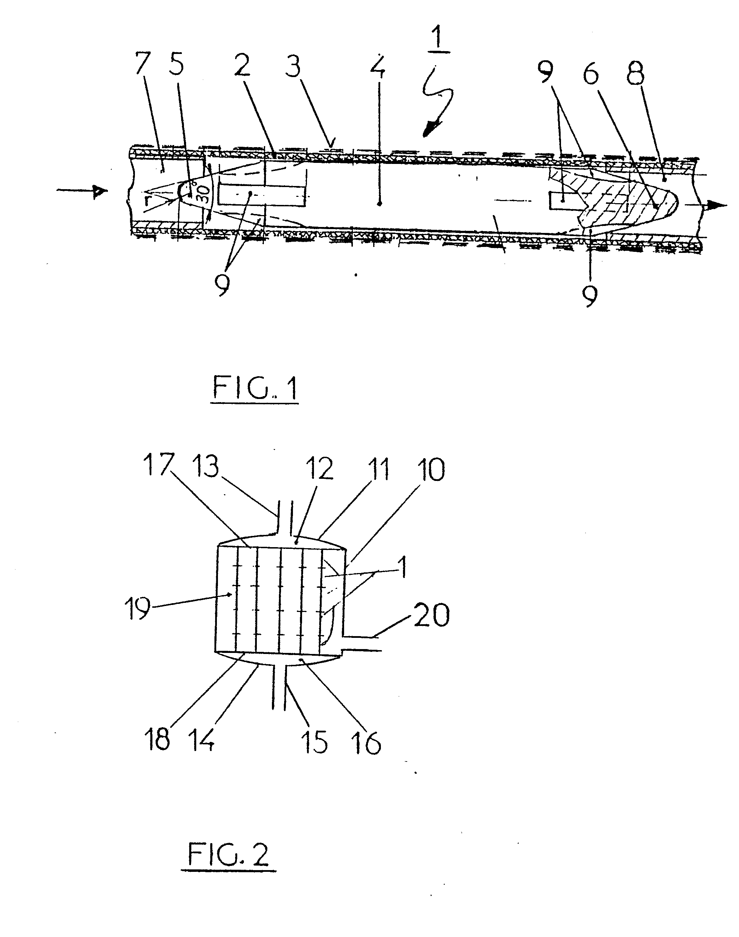

In der Fig. 1 ist ein Schlauchfilter 1 zur Durchführung von Querstrom-Druckfiltrationen dargestellt, bei dem ein poröser Filterschlauch 2 aus Polytetrafluorethylen mit einer mittleren Porenöffnung von 5 $\mu$m mit einem Stahldrahtgewebe aus korrosionsbeständigem Edelstahldraht als Druckpanzer vollständig umhüllt ist. Dieses Druckmantelgewebe 3 ist so locker und weitmaschig ausgelegt, daß es an jeder Stelle vollkommen fluiddurchlässig ist.

In der Darstellung der Fig. 1 sind links der zulaufseitige Druckanschluß und rechts der Druckanschluß für den Konzentratablauf, die den Filterschlauch druckfest und fluiddicht und die Enden des Druckmantelgewebes druckfest einspannen und anschließen, aus Gründen der besseren Übersichtlichkeit nicht dargestellt. Solche Anschlüsse sind jedoch an sich bekannt und brauchen vorliegend nicht im einzelnen erläutert zu werden.

Im Inneren des Filterschlauchs 2 ist ein stabförmiger Reduktionskörper 4 angeordnet, dessen Außendurchmesser um 15 % kleiner als der Innendurchmesser des Filterschlauchs 2 ist. Die anströmseitige Stirnseite 5 und die abströmseitige Stirnseite 6 des stabförmigen Reduktionskörpers 4 sind strömungsgünstig kegelförmig mit abgerundeter Kappe ausgebildet. Zu beiden Seiten des stabförmigen Reduktionskörpers sind im Filterschlauch 2 Stützhülsen oder Käfighülsen 7,8 axial fixiert fest eingesetzt, deren lichter Innendurchmesser kleiner als der Außendurchmesser des Reduktionskörpers, gleichzeitig aber größer als dessen stirnseitige Enden 5,6 ist. Die beiden Hülsen 7,8 sind dabei axial mit einem solchen Abstand voneinander angeordnet, daß dem Reduktionskörper 4 ein beschränkter axialer Bewegungsbereich verfügbar bleibt. Um zu verhindern, daß der Filterschlauch 2 durch die Ausbildung einer Kantendichtung zwischen dem Kragen der Hülse 8 und der Kegelmantelfläche der Stirnseite 6 des Reduktionskörpers 4 verschlossen wird, sind die Stirnseite des Reduktionskörpers 4 zumindest im dem Bereich, in dem der Außendurchmesser des Reduktionskörpers zumindest im wesentlichen gleich dem Innendurchmesser der Hülsen 7,8 ist, mit axial ausgerichteten relativ breiten und tiefen Strömungskanaleinschnitten 9 versehen, die einen ungehinderten Durchtritt des aus dem Ringraum zwischen dem Reduktionskörper 4 und dem Innenmantel des Filterschlauchs 2 austretenden Mediums in die Hülse hinein und von dort an die Druckanschlüsse ermöglicht.

In der Fig. 2 ist schematisch nach Art eines Blockschaltbildes ein Druckfiltrationsgerät dargestellt, bei dem insgesamt 25 der in Fig. 1 gezeigten Schlauchfilter sowohl in Serienschaltung als auch in Parallelschaltung zueinander als modular konzipierte Filterelemente in einem flachen Filtergehäuse 10 angeordnet sind. Das Filtergehäuse weist einen zulaufseitigen gewölbten Deckel 11 auf, in dem ein Zulauf-Druckraum 12 ausgebildet ist, in den der Zulauf über den Zulaufstutzen 13 eingedrückt wird. Axial gegenüberliegend ist ein ebenfalls flach und trichterartig gewölbter Boden 14 mit einem Konzentratablaufstutzen 15 ausgebildet. Im Boden 14 ist ein Sammelraum 16 für den Konzentratablauf ausgebildet. Durch Radialböden 17 bzw. 18 sind der Zulaufdruckraum 12 und der Konzentratsammelraum 16 druckdicht und fluiddicht vom Innenraum 19 des Druckfiltrationsgehäuses 10 abgetrennt. Die Böden 17 und 18 sind mit Druckanschlüssen versehen, zwischen denen mehrere zueinander parallele Schlauchfilter 1, jeweils zu mehreren, hier zu fünft, in Serie hintereinandergeschaltet, angeordnet sind. Zur Durchführung einer auf diese Weise großflächigen Querstromfiltration wird der Zulauf unter einem Druck von beispielsweise 50.000 kPa durch den Zulaufstutzen 13 in den Zulaufdruckraum 12 eingedrückt. Dort verteilt sich der Zulauf auf die einzelnen Schlauchfilterstränge und tritt aus diesen als Konzentrat in den Konzentratsammelraum 16 aus. Das während dieses Durchströmens der Schlauchfilterstränge radial durch die Wandungen der Wandfilter 1 hindurchtretende Filtrat tritt ebenfalls ungehindert durch die Druckmantelgewebe 3 der Filterschläuche 2 hindurch und wird im Innenraum 19 des Filtrationsgefäßes 10, der hier also als Filtratsammelraum dient, gesammelt und über den Filtratablaufstutzen 20 aus dem Druckfiltrationsgefäß 10 abgeleitet.

Bei dem in Fig. 2 gezeigten Ausführungsbeispiel eines Druckfiltrationsgefäßes kann der Filtratabzug ungedrosselt oder gedrosselt erfolgen, so daß also im Filtratsammelraum 19 entweder Umgebungsdruck oder ein wahlweise einstellbarer Überdruck aufrechterhalten wird.

Das in der Fig. 2 gezeigte Druckfiltrationsgerät ist lediglich als schematisches Ausführungsbeispiel für die Reihenschaltung und/oder Parallelschaltung der Schlauchfilter gemäß der Erfindung zu verstehen. Dem Fachmann ist ersichtlich, daß die Druckfiltrationsgeräte unter Verwendung der biegeelastischen Schlauchfilter als Filtermodulen auch in beliebiger anderer Weise aufgebaut sein können, so beispielsweise nach Art von Rohrbündeltauschern und mit wesentlich größerer Menge, wodurch die aktive Filterfläche auf engem Raum mit großer Fläche zur Durchführung der Querstromfiltrationsverfahren mit hoher Strömungsgeschwindigkeit zur Verfügung gestellt werden können.

## Ansprüche

1. Schlauchfilter für die Druckfiltration mit einem Filterschlauch als Filter,

**gekennzeichnet** durch

ein den Filterschlauch (2) außen vollständig umhüllendes fluiddurchlässiges Druckmantelgewebe (3).

2. Schlauchfilter nach Anspruch 1,

dadurch **gekennzeichnet,**

daß der Filterschlauch (2) beidseitig offen ist und an seinem einen Ende mit einem Druckanschluß für den Zulauf und an seinem anderen Ende mit einem Druck anschluß für den Konzentratablauf versehen ist, wobei auch die Enden des Druckmantelgewebes (3) druckfest mit den Druckanschlüssen verbunden sind.

3. Schlauchfilter nach einem der Ansprüche 1 oder 2,

**gekennzeichnet** durch

einen an-und abströmseitig strömungsgünstig profilierten stabförmigen Reduktionskörper (4), dessen Aussendurchmesser geringfügig kleiner als der Innendurchmesser des Filterschlauches (2) ist und der unter Bildung eines schmalen axialen Strömungsringraumes im Filterschlauch (2) zwischen zwei im Filterschlauch befestigten Stützhülsen (7,8) mit Spiel axial fixiert ist.

4. Schlauchfilter nach Anspruch 3,

dadurch **gekennzeichnet,**

daß der Reduktionskörper (4) aus einem formsteifen, biegeelastischen Werkstoff besteht.

5. Verwendung des Schlauchfilters nach einem der Ansprüche 1 bis 4 in Reihenschaltung und/oder in Prallelschaltung als Filtermodul in Druckfiltrationsgeräten.

FIG. 1

FIG. 2